# EUROPEAN PATENT APPLICATION

(11) **EP 2 811 799 A1**
(43) Date of publication of application: **10.12.2014**
(21) Application number: 13743834.7
(22) Date of filing: 30.01.2013
(51) Int. Cl.: H04W 72/04, H04B 7/04, H04J 11/00, H04J 99/00, H04W 16/32

(54) **WIRELESS BASE STATION DEVICE, USER TERMINAL, WIRELESS COMMUNICATION SYSTEM, AND WIRELESS COMMUNICATION METHOD**

(30) Priority: 30.01.2012 JP 2012017314
(71) Applicant: NTT DOCOMO, INC., Tokyo 100-6150 (JP)
(72) Inventor: TAKEDA, Kazuaki, Tokyo 100-6150 (JP); NAGATA, Satoshi, Tokyo 100-6150 (JP); LIU, Liu, Beijing 100190 (CN); CHEN, Lan, Beijing 100190 (CN); MU, Qin, Beijing 100190 (CN); WANG, Wenbo, Beijing 100876 (CN)
(74) Representative: Hoffmann Eitle
(86) International application number: PCT/JP2013/052065
(87) International publication number: WO 2013/115260

(57) **Abstract**

The present invention is designed to allocate radio resources for an extended control channel adequately in a configuration in which a downlink control channel is extended. A radio base station apparatus according to the present invention has a mapping section configured to separate and map, per predetermined frequency domain unit constituting a system band, a common search space, which is a candidate region to arrange common control information that is common between user terminals in, and a UE-specific search space, which is a candidate region to arrange specific control information that is specific to each user terminal in, and a transmission section configured to frequency-division-multiplex with a downlink shared data channel and transmit an extended downlink control channel, in which the common control information is arranged in the common search space and in which the specific control information is arranged in the UE-specific search space, and the mapping section maps the common search space to a plurality of frequency domain units such that the common search space is distributed in the system band.

## Description

### Technical Field

The present invention relates to a radio base station apparatus, a user terminal, a radio communication system and a radio communication method in a next-generation radio communication system.

### Background Art

In a UMTS (Universal Mobile Telecommunications System) network, long-term evolution (LTE) is under study for the purposes of further increasing high-speed data rates, providing low delay, and so on (non-patent literature 1). In LTE, as multiple access schemes, a scheme based on OFDMA (Orthogonal Frequency Division Multiple Access) is used on the downlink, and a scheme based on SC-FDMA (Single Carrier Frequency Division Multiple Access) is used on the uplink.

Also, successor systems of LTE (referred to as, for example, "LTE-Advanced" or "LTE enhancement" (hereinafter referred to as "LTE-A")) are under study for the purposes of further broadbandization and increased speed beyond LTE. In LTE (Rel. 8) and LTE-A (Rel. 9 and Rel. 10), MIMO (Multi-Input Multi-Output) techniques are under study as radio communication techniques to transmit and receive data with a plurality of antennas and improve spectral efficiency. According to MIMO techniques, a plurality of transmitting/receiving antennas are provided in the transmitter/receiver, so that different transmission information sequences are transmitted from different transmitting antennas at the same time.

### Citation List

### Non-Patent Literature

Non-Patent Literature 1: 3GPP TR 25.913 "Requirements for Evolved UTRA and Evolved UTRAN"

### Summary of Invention

### Technical Problem

Now, in LTE-A, which is a successor system of LTE, multiple-user MIMO (MU-MIMO) transmission to transmit transmission information sequences to different users from different transmitting antennas at the same time, is defined. This MU-MIMO transmission is also under study for further application to a HetNet (Heterogeneous Network), CoMP (Coordinated Multi-Point) transmission, and so on.

In future systems, the capacity of downlink control channels to transmit downlink control signals is expected to run short, due to an increase in the number of users to be connected to a radio base station apparatus. Consequently, there is a threat that conventional radio resource allocation methods fail to optimize the characteristics of future systems such as MU-MIMO transmission.

As a method to solve such problems, a method of extending the region to allocate a downlink control channel to, and transmitting more downlink control signals may be possible. However, when a downlink control channel is extended, how to allocate the radio resources for the extended downlink control channel becomes an important issue. Also, in a HetNet, in which small base station apparatuses are arranged in the coverage area of a radio base station apparatus in an overlapping manner, it is important to allocate radio resources for an extended downlink control channel taking into account the influence of interference between the radio base station apparatus and the small base station apparatuses.

The present invention has been made in view of the above, and it is therefore an object of the present invention to provide a radio base station apparatus, a user terminal, a radio communication system and a radio communication method, which make it possible to allocate radio resources for an extended downlink control channel adequately.

### Solution to Problem

A radio base station apparatus according to the present invention has: a mapping section configured to separate and map, per predetermined frequency domain unit constituting a system band, a common search space, which is a candidate region to arrange common control information that is common between user terminals in, and a UE-specific search space, which is a candidate region to arrange specific control information that is specific to each user terminal in; and a transmission section configured to frequency-division-multiplex with a downlink shared data channel and transmit an extended downlink control channel, in which the common control information is arranged in the common search space and in which the specific control information is arranged in the UE-specific search space, and, in this radio base station apparatus, the mapping section maps the common search space to a plurality of frequency domain units such that the common search space is distributed in the system band.

A user terminal according to the present invention has: a receiving section configured to receive an extended downlink control channel, which is frequency-division-multiplexed with a downlink shared data channel, and in which common control information that is common between user terminals is arranged in a common search space and specific control information that is specific to each user terminal is arranged in a UE-specific search space; and a decoding section configured to blind-decode the common control information arranged in the common search space, and also blind-decode the specific control information arranged in the UE-specific search space, and, in this user terminal: the common search space and the UE-specific search space are separated per predetermined frequency domain unit constituting a system band; and the common search space is mapped to a plurality of frequency domain units to be distributed in the system band.

A radio communication system according to the present invention has: a radio base station apparatus having: a mapping section configured to separate and map, per predetermined frequency domain unit constituting a system band, a common search space, which is a candidate region to arrange common control information that is common between user terminals in, and a UE-specific search space, which is a candidate region to arrange specific control information that is specific to each user terminal in; and a transmission section configured to frequency-division-multiplex with a downlink shared data channel and transmit an extended downlink control channel, in which the common control information is arranged in the common search space and in which the specific control information is arranged in the UE-specific search space, and a user terminal having: a receiving section configured to receive the extended downlink control channel; and a decoding section configured to blind-decode the common control information arranged in the common search space, and also blind-decode the specific control information arranged in the UE-specific search space, and, in this radio communication system, the mapping section maps the common search space to a plurality of frequency domain units such that the common search space is distributed in the system band.

A radio communication method according to the present invention is a radio communication method for allowing a radio base station apparatus to transmit an extended downlink control channel that is frequency-division-multiplexed with a downlink shared data channel to a user terminal, and this radio communication method includes the steps in which: the radio base station apparatus separates and maps, per predetermined frequency domain unit constituting a system band, a common search space, which is a candidate region to arrange common control information that is common between user terminals in, and a UE-specific search space, which is a candidate region to arrange specific control information that is specific to each user terminal in; the radio base station apparatus frequency-division-multiplexes with a downlink shared data channel and transmits an extended downlink control channel, in which the common control information is arranged in the common search space and in which the specific control information is arranged in the UE-specific search space; the user terminal receives the extended downlink control channel; and the user terminal blind-decodes the common control information arranged in the common search space, and also blind-decodes the specific control information arranged in the UE-specific search space, and, in this radio communication method, the radio base station apparatus maps the common search space to a plurality of non-consecutive frequency domain units such that the common search space is distributed in the system band.

### Advantageous Effects of Invention

According to the present invention, in a configuration in which a downlink control channel is extended, it is possible to allocate radio resources for the extended downlink control channel adequately.

### Brief Description of Drawings

FIG. 1 is a schematic diagram of a HetNet where MU-MIMO is applied;
FIG. 2 is a diagram to show an example of a subframe where downlink MU-MIMO transmission is performed;
FIG. 3 provides diagrams to explain a subframe configuration of an extended PDCCH;
FIG. 4 is a diagram to show an example of allocation of an extended PDCCH to a system band;
FIG. 5 is a diagram to show an example of allocation of a common search space and a UE-specific search space in an extended PDCCH;
FIG. 6 is a diagram to show the relationship of enhanced channel control elements (eCCEs) with respect to a common search space in an extended PDCCH;
FIG. 7 provides diagrams to show an example of a distributed mapping method of a common search space of an extended PDCCH according to a first example;
FIG. 8 is a diagram to explain a distributed mapping method of a common search space of an extended PDCCH according to a second example;
FIG. 9 is a diagram to explain an example of a distributed mapping method of a common search space of an extended PDCCH according to a second example;
FIG. 10 provides diagrams to explain an example of a distributed mapping method of a common search space of an extended PDCCH according to a second example;
FIG. 11 is a diagram to explain another example of a distributed mapping method of a common search space of an extended PDCCH according to a second example;
FIG. 12 provides diagrams to explain another example of a distributed mapping method of a common search space of an extended PDCCH according to a second example;
FIG. 13 is a diagram to explain a system configuration of a radio communication system according to an embodiment;
FIG. 14 is a diagram to explain an overall configuration of a radio base station apparatus according to an embodiment;
FIG. 15 is a diagram to show an overall configuration of a user terminal according to an embodiment;
FIG. 16 is a functional block diagram to show a baseband processing section and part of higher layers provided in a radio base station apparatus according to an embodiment; and
FIG. 17 is a functional block diagram of a baseband processing section of a user terminal according to an embodiment.

### Description of Embodiments

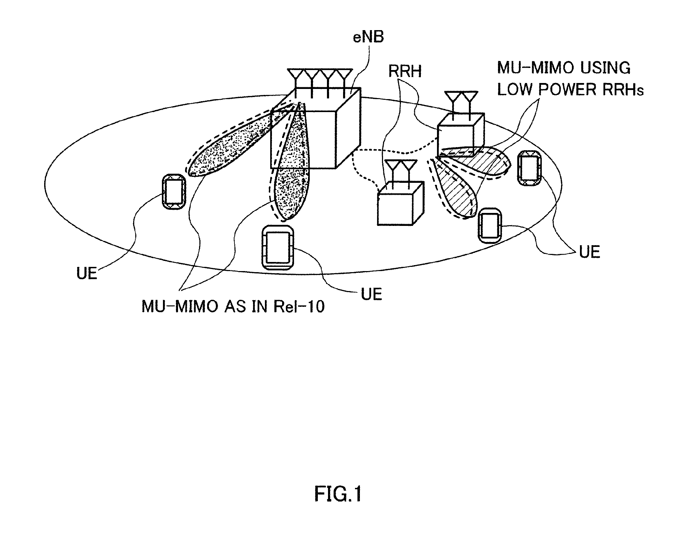

FIG. 1 is a diagram to show an example of a HetNet where MU-MIMO transmission is applied. The system shown in FIG. 1 is configured in layers, by providing small base station apparatuses (for example, RRHs (Remote Radio Heads)) having local coverage areas in the coverage area of a radio base station apparatus (for example, eNB (eNodeB)). In downlink MU-MIMO transmission in a system like this, data for a plurality of user terminals UE (User Equipment) #1 and UE #2 is transmitted at the same time from a plurality of antennas of the radio base station apparatus. Also, data for a plurality of user terminals UE #3 and UE #4 is transmitted at the same time from a plurality of antennas of a plurality of small base station apparatuses.

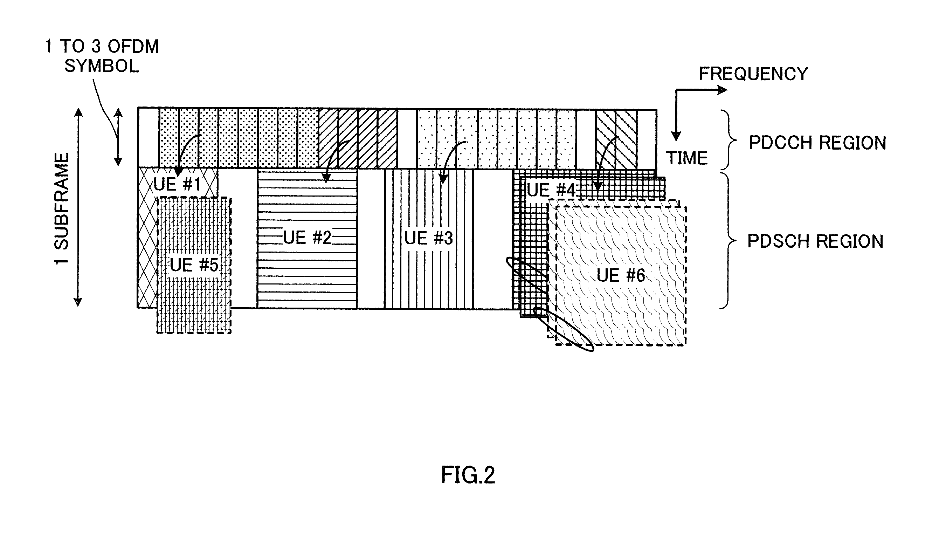

FIG. 2 is a diagram to show an example of a radio frame (for example, one subframe) where downlink MU-MIMO transmission is applied. As shown in FIG. 2, in a system where MU-MIMO transmission is applied, a predetermined number of OFDM symbols (one to three OFDM symbols) from the top of each subframe are secured as a resource region (PDCCH region) for a downlink control channel (PDCCH: Physical Downlink Control Channel). Also, a resource region (PDSCH region) for a downlink shared data channel (PDSCH: Physical Downlink Shared Channel) is secured in radio resources following the predetermined number of symbols from the subframe top.

In the PDCCH region, downlink control information (DCI) for user terminals UE (here, UE #1 to UE #4) is allocated. The downlink control information (DCI) includes allocation information in the PDSCH region. In this way, in each subframe, downlink data signals for user terminals UE and downlink control information (DCI) signals for receiving that downlink data are time-division-multiplexed and transmitted.

MU-MIMO transmission makes it possible to transmit data to a plurality of user terminals UE at the same time and in the same frequency. Consequently, in the PDSCH region of FIG. 2, it may be possible to multiplex data for user terminal UE #1 and data for user terminal UE #5 over the same frequency region. Similarly, it may also be possible to multiplex data for user terminal UE #4 and data for user terminal UE #6 over the same frequency region.

However, when downlink control information for many user terminals UE is allocated in the PDCCH region, cases might occur where, as shown in FIG. 2, the PDCCH regions for transmitting downlink control information, corresponding to user terminals UE #5 and UE #6, run short. In this case, the number of user terminals UE that can be multiplexed over the PDSCH region is limited.

In this way, there is a threat that, even when the number of user terminals to multiplex over the same radio resources is increased by MU-MIMO transmission, if the PDCCH region for transmitting downlink control information runs short, it is not possible to optimize the efficiency of use of the PDSCH region.

As a method of providing a solution to such a shortage of the PDCCH region, it may be possible to extend the region to allocate the PDCCH to, beyond the control region that is maximum three OFDM symbols from the top of a subframe (that is, extend the PDCCH region into an existing PDSCH region). For example, a method of frequency-division-multiplexing a PDSCH and a PDCCH in a PDSCH region (frequency division (FDM) approach), is possible. A PDCCH that is frequency-division-multiplexed with a PDSCH like this will be referred to as an extended PDCCH (also referred to as an extended downlink control channel, an E-PDCCH, an enhanced PDCCH, an FDM-type PDCCH, a UE-PDCCH and so on), to distinguish from an existing PDCCH.

When the frequency division approach is applied, it becomes possible to achieve beam forming gain by demodulating an extended PDCCH using user-specific reference signals (DM-RSs: DeModulation-Reference Signals). In this case, beam forming for individual user terminals UE becomes possible and sufficient received quality is achieved, so that this may be effective to increase capacity.

Now, as for the format of an extended PDCCH, it is possible to apply either the method ("with cross interleaving") of allocating each user's downlink control signal in control channel element (CCE) units, which are formed with a plurality of resource element groups (REGs), as is the case with an existing PDCCH, or the method ("without cross interleaving") of allocating each user's downlink control signal in PRB units.

In the case of the method "without cross interleaving," each user's downlink control signal is allocated to an extended PDCCH in VRB units. In radio resources where an extended PDCCH may be arranged, DM-RSs, which are user-specific downlink reference signals, are also arranged. Consequently, it is possible to demodulate an extended PDCCH using DM-RSs. In this case, it is possible to execute channel estimation on a per PRB basis, so that beam forming can be executed effectively for each mobile terminal apparatus UE.

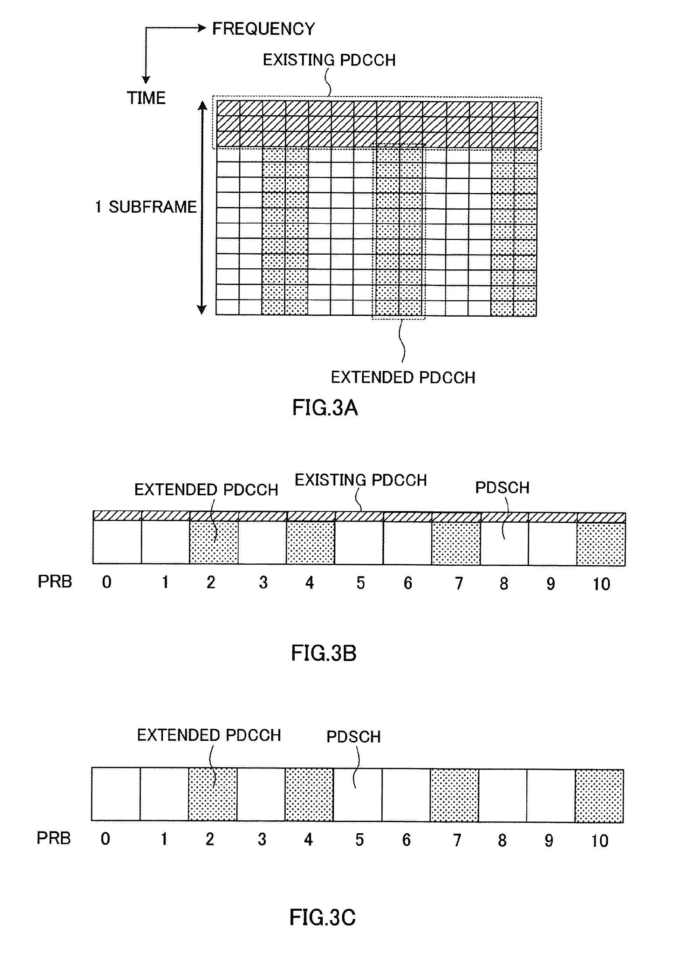

FIG. 3 shows an example of a frame configuration used when the frequency division approach is applied. In the frame configuration shown in FIG. 3A, an existing PDCCH and extended PDCCHs are arranged. The existing PDCCH is arranged over the entire system band from the top of a frame (hereinafter referred to as a "subframe"), which serves as a transmission time interval, to a predetermined OFDM symbol (covering maximum three OFDM symbols). In radio resources following the OFDM symbols where the existing PDCCH is located, extended PDCCHs are located, frequency-divided with PDSCHs.

Also, as shown in FIG. 3B, the system band is formed with predetermined frequency domain units. This predetermined frequency domain unit may be, for example, a physical resource block (PRB) (also simply referred to as a "resource block" (RB)), a resource block group (RBG), which is formed with a plurality of consecutive physical resource blocks, and so on. In FIG. 3B, resource blocks are used as the predetermined frequency domain units, and resource blocks corresponding to part of the system band are allocated to extended PDCCHs. Note that a resource block is also one unit of scheduling.

Also, as a frame configuration for Rel. 11 and later versions, a carrier type (extension carrier), in which a subframe does not have a PDCCH region that lasts from the top of the subframe to a predetermined OFDM symbol (covering maximum three OFDM symbols), is under study. In a subframe where this extension carrier type is applied, an existing PDCCH is not allocated, and only extended PDCCHs can be allocated. Note that, in a subframe where an extension carrier type is applied, extended PDCCHs may be allocated for maximum three OFDM symbols from the top (see FIG. 3C).

When such a frequency division approach is applied, how to map extended PDCCHs to the system band becomes an issue. This is because, as described above, extended PDCCHs are frequency-division-multiplexed with PDSCHs and mapped to part of the system band.

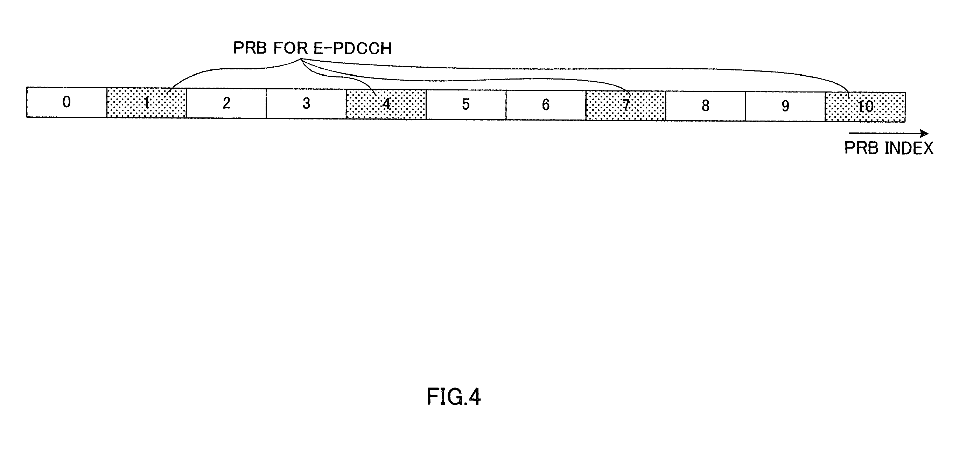

FIG. 4 shows an example of mapping of an extended PDCCH. In FIG. 4, the system band is formed with eleven physical resource blocks (PRBs). The eleven PRBs are assigned PRB indices (PRBs #0 to #10) along the frequency direction. In FIG. 4, the extended PDCCH is mapped to four non-consecutive PRBs #1, #4, #7 and #10. In this way, by mapping an extended PDCCH to four non-consecutive PRBs, it is possible to distribute the extended PDCCH in the system band. As a result of this, a frequency diversity effect with respect to the extended PDCCH can be achieved.

Note that, although, in FIG. 4, the extended PDCCH is mapped in PRB units, this is by no means limiting. For example, an extended PDCCH may be mapped per RBG (Resource Block Group), which is formed with a plurality of consecutive PRBs (for example, two or four PRBs).

Now, in an existing PDCCH, search spaces (SSs), which indicate ranges where user terminals UE blind-decode downlink control information (DCI), are defined. A user terminal UE performs blind decoding in search spaces signaled (for example, through RRC signaling) from a radio base station apparatus.

The types of such search spaces include common search spaces (CSSs) and UE-specific search spaces (UE-SSs) (also referred to as "dedicated search spaces"). Common search spaces represent ranges where user terminals UE in a cell should blind-decode common control information. Also, UE-specific search spaces represent ranges where each user terminal UE should blind-decode specific control information.

Note that the common control information refers to downlink control information that is common between user terminals UE in a cell, and is, for example, information that is defined in DCI formats 0, 1A and so on. Also, the specific control information refers to downlink control information that is specific to each user terminal UE in a cell, and includes, for example, downlink shared data channel allocation information (DL assignments), uplink shared data channel scheduling information (UL grants), and so on.

Search spaces such as above are defined with control channel elements (CCEs), which are the unit of allocation of an existing PDCCH, and aggregation levels, which show how many CCEs can be allocated to an existing PDCCH in a row. For example, search spaces are defined in one-CCE units at aggregation level 1, in two-CCE units at aggregation level 2, in four-CCE units at aggregation level 3, and in eight-CCE units at aggregation level 4. Note that common search spaces support aggregation levels 3 and 4, and UE-specific search spaces support aggregation levels 1 to 4. Also, the aggregation level is determined based on the received quality of signals at user terminals UE.

In an existing PDCCH, search spaces such as the ones described above are defined, so that it is possible to reduce the number of times a user terminal UE performs blind decoding. Consequently, even in an extended PDCCH where the method "without cross interleaving" is applied, there has been a demand to define common search spaces and UE-specific search spaces in order to reduce the number of times user terminals UE perform blind decoding. So, the present inventors have studied mapping of common search spaces and UE-specific search spaces in an extended PDCCH and arrived at the present invention.

### (First Example)

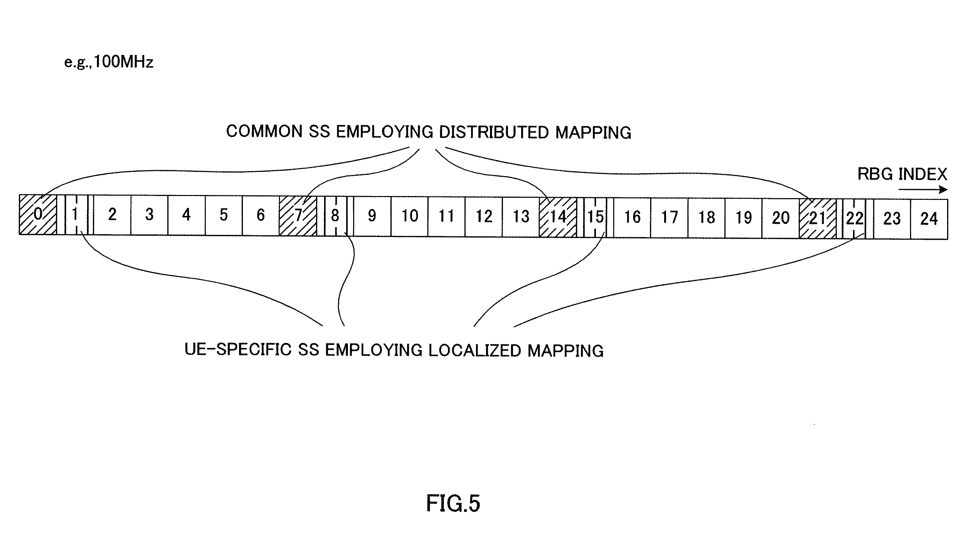

An example of a method of mapping an extended PDCCH according to a first example will be described with reference to FIG. 5 to FIG. 7. Note that although an example of mapping an extended PDCCH in RBG units will be described below, this is by no means limiting.

FIG. 5 shows an example of mapping of an extended PDCCH according to the first example. FIG. 5 shows an example of a 100-MHz system band, where 100 PRBs (not shown) are arranged in a row along the frequency direction. Here, if the system band is formed with 100 PRBs, one RBG is formed with four consecutive PRBs. Consequently, twenty five RBGs are shown in FIG. 5. Also, the twenty five RBGs are assigned RBG indices (RBGs #0 to #24) along the frequency direction.

Note that the example shown in FIG. 5 by no means limits the system band, the number of PRBs, and the number of PRBs to constitute one RBG. For example, when the system band is formed with twenty five PRBs, one RBG is formed with two consecutive PRBs, and thirteen RBGs are shown.

As shown in FIG. 5, a radio base station apparatus separates and maps common search spaces where common control information is arranged, and UE-specific search spaces where specific control information is arranged, per RBG constituting the system band. To be more specific, the common search spaces are mapped to four non-consecutive RBGs (RBGs #0, #7, #14 and #21) so as to be distributed over the entire system band. Also, the UE-specific search spaces are mapped to four non-consecutive RBGs (RBGs #1, #8, #15 and #22) so as to be distributed over the entire system band.

The common control information to be arranged in the common search spaces is downlink control information that is common between user terminals in the cell, as described above, and therefore is preferably transmitted in distributed frequency bands, so that a frequency diversity effect can be achieved. Consequently, the common search spaces are distributed-mapped to a predetermined number of non-consecutive RBGs (in FIG. 5, four RBGs #0, #7, #14 and #21) that are distributed over the entire system band.

Also, the specific control information to be arranged in the UE-specific search spaces is downlink control information that is dedicated to each user terminal UE, and therefore is preferably transmitted locally in frequency bands where received quality is the best for target user terminals UE. Consequently, while the UE-specific search space are distributed-mapped to a predetermined number of non-consecutive RBGs (in FIG. 5, four RBGs #1, #8, #15 and #22) that are distributed over the entire system band, the specific control information is mapped locally to a predetermined RBG. Also, if received quality is not available for use, distributed mapping may be applied.

The mapping positions of the common search spaces and the UE-specific search spaces shown in FIG. 5 are signaled to user terminals UE through a higher layer (for example, through the RRC layer). This signaling of mapping positions may use bitmap (for example, in FIG. 5, a twenty-five bitmap to represent twenty five RBGs).

Also, the mapping positions of the common search spaces may be transmitted to user terminals UE as broadcast information (for example, as MIB, SIB and so on) through broadcast transmission. This is because the mapping positions of the common search spaces are common between user terminals UE in the cell. In this case, too, bitmap may be used.

Note that, although, in FIG. 5, the common search spaces and the UE-specific search space are separated and mapped in RBG units, this is by no means limiting. For example, the common search spaces and the UE-specific search spaces may be separated and mapped on a per PRB basis as well.

Also, although, in FIG. 5, the number of RBGs where the common search spaces and the UE-specific search spaces are mapped is four for both, this is by no means limiting. Also, part of a plurality of RBGs where the common search spaces and the UE-specific search spaces are mapped may be consecutive.

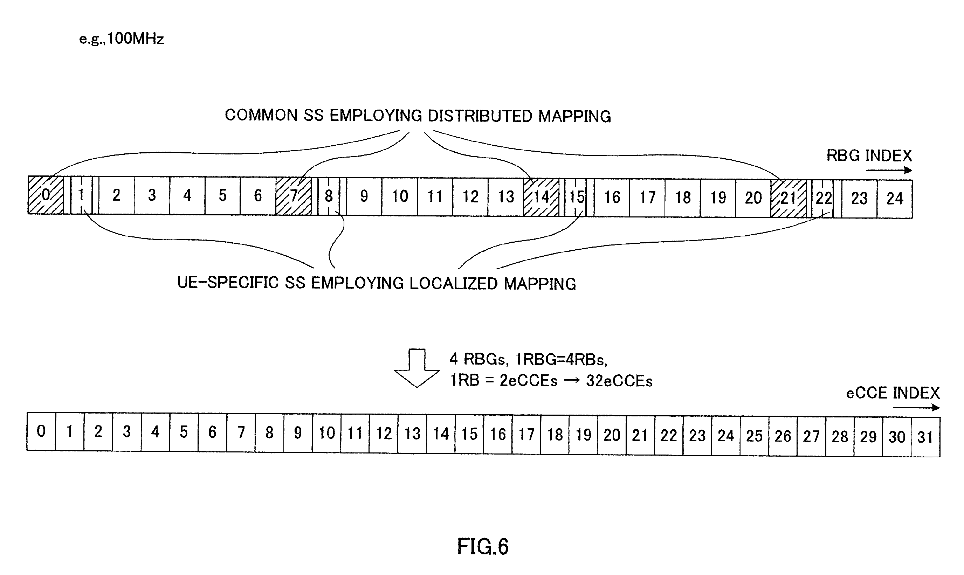

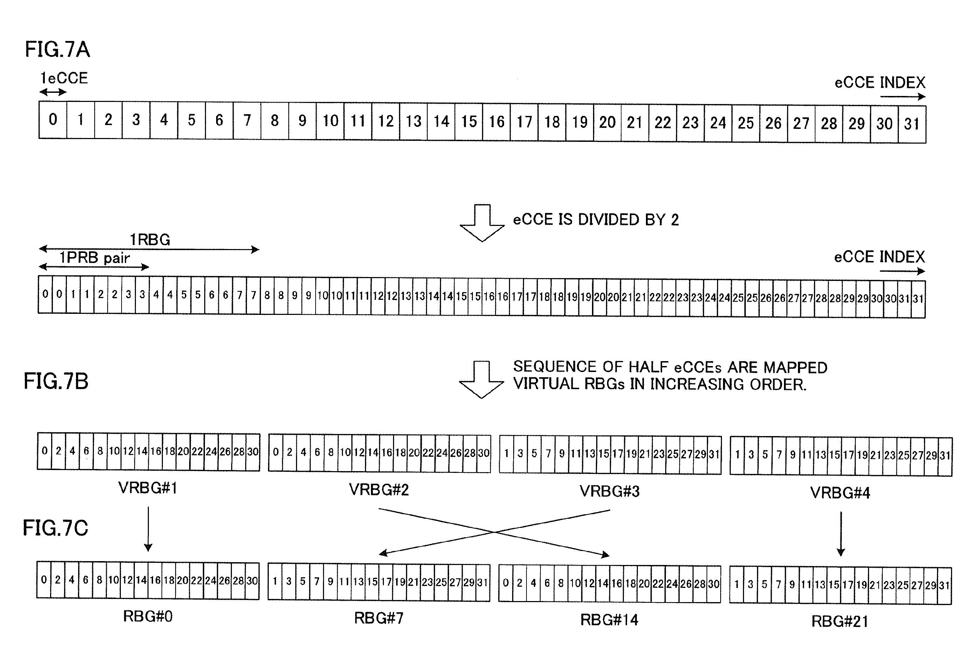

Next, distributed mapping of common search spaces of an extended PDCCH according to the first example will be described with reference to FIG. 6 and FIG. 7. Note that FIG. 6 and FIG. 7 each show an example of a 100-MHz system band, similar to FIG. 5. Also, although examples of performing distributed mapping of common search spaces in RBG units will be described with FIG. 6 and FIG. 7, it is equally possible to perform distributed mapping in PRB units.

FIG. 6, shows association of common search spaces that are distributed-mapped to four non-consecutive RBGs (RBGs #0, #7, #14 and #21), and enhanced control channel elements (eCCEs). As described above, a CCE is the minimum allocation unit for an existing PDCCH. In an extended PDCCH, eCCEs are defined so that existing CCEs can be reused. That is, the minimum allocation unit for the extended PDCCH is an eCCE. Consequently, the common search spaces of the extended PDCCHs are managed on a per eCCE basis.

In FIG. 6, one RBG is formed with four RBs (PRBs). One RB (PRB) corresponds to two eCCEs. Consequently, the common search spaces that are mapped to four RBGs are defined with 4×4×2=32 eCCEs. In FIG. 6, the eCCEs are numbered with index numbers #0 to #31, in order, from the smallest of RBG indices #0, #7, #14 and #21, along the frequency direction. Note that the number of eCCEs to constitute one PRB is by no means limited to two and may be other numbers as well (for example, four).

With the first example, the eCCEs to constitute the common search spaces in an extended PDCCH are divided each and mapped such that the divided eCCEs are distributed to RBGs of different frequency bands. By this means, a frequency diversity effect can be achieved with respect to the common control information that is transmitted in the common search spaces.

To be more specific, as shown in FIG. 7A, the radio base station apparatus divides eCCEs #0 to #31, which are allocated as common search spaces, into two each. When one eCCE is divided into two, sixteen eCCEs (for example, eCCEs #0, #0, #1, #1, ... #7, and #7) correspond to one RBG (for example, RBG #0).

Next, as shown in FIG. 7B, the eCCEs divided in FIG. 7A are distributed and arranged in a plurality of virtual resource regions. In FIG. 7B, four virtual resource block groups (VRBGs) #1 to #4 are defined as virtual resource regions, and the sixty four eCCEs shown in FIG. 7A are distributed and mapped to VRBGs #1 to #4.

To be more specific, eCCEs that are assigned the same index number in FIG. 7A are arranged in VRBGs of varying index numbers in FIG. 7B. For example, two eCCEs #0, assigned the same index number, are arranged in VRBG #1 and VRBG #2. Similarly, two eCCEs #1 are arranged in VRBG #3 and VRBG #4. The same applies to eCCEs #2 to #31.

As shown in FIG. 7C, a plurality of virtual resource regions (VRBGs #1 to #4) where eCCEs are arranged in a distributed manner are interleaved and mapped to original RBGs #0, #7, #14 and #21. FIG. 7C shows an example where the VRBGs of odd index numbers are mapped to the original RBGs in ascending order, and then the VRBGs of even index numbers are mapped to the original RBGs in ascending order. That is, VRBG #1 is mapped to original RBG #0, VRBG #2 is mapped to original RBG #7, VRBG #3 is mapped to original RBG #14, and VRBG #4 is mapped to original RBG #21.

As shown in FIG. 7C, by interleaving and mapping VRBGs back to the original RBGs, it is possible to expand the frequency interval between a pair of eCCEs assigned the same index number, so that a frequency diversity effect of the common search spaces can be achieved.

Note that the distributed mapping method described with FIG. 6 and FIG. 7 may be applied not only to common search spaces but also to UE-specific search spaces as well.

As described above, with the extended PDCCH mapping method according to the first example, the radio base station apparatus separates and maps common search spaces and UE-specific search spaces in PRB units or in RBG units. In particular, the radio base station apparatus maps the common search spaces, in which common control information for all user terminals UE in the cell is arranged, to a plurality of frequency domain units (PRBs or RBGs) so as to be distributed in the system band. Consequently, by the frequency diversity effect, user terminals UE located in different positions in the cell are able to decode the common control information reliably. Also, the radio base station apparatus maps the UE-specific search spaces, in which specific control information that is dedicated to specific user terminals UE is arranged, to a plurality of frequency domain units (PRBs or RBGs) so as to be localized in parts in the system band. Consequently, the specific user terminals UE are able to decode the specific control information using frequency domain units (PRBs or RBGs) of better received quality. Also, if received quality is not available for use, distributed mapping may be applied.

In particular, by applying the above-described mapping method to a small base station apparatus of a HetNet, the small base station apparatus is able to transmit common control information and specific control information to user terminals UE using not only an existing PDCCH where the influence of interference by CRSs from a large base station apparatus and so on is significant, but also using an extended PDCCH where the influence of interference is insignificant. To be more specific, since a beam forming effect can be achieved in an extended PDCCH by virtue of DM-RSs, a user terminal UE that is connected with the small base station apparatus is able to blind-decode the common search spaces arranged in the extended PDCCH more effectively by CRE (Cell Range Expansion), which will be described later. As a result of this, interference coordination in the HetNet becomes possible. Also, adaptability to low-cost MTC devices is also achieved. Also, if received quality is not available for use, distributed mapping may be applied.

### (Second Example)

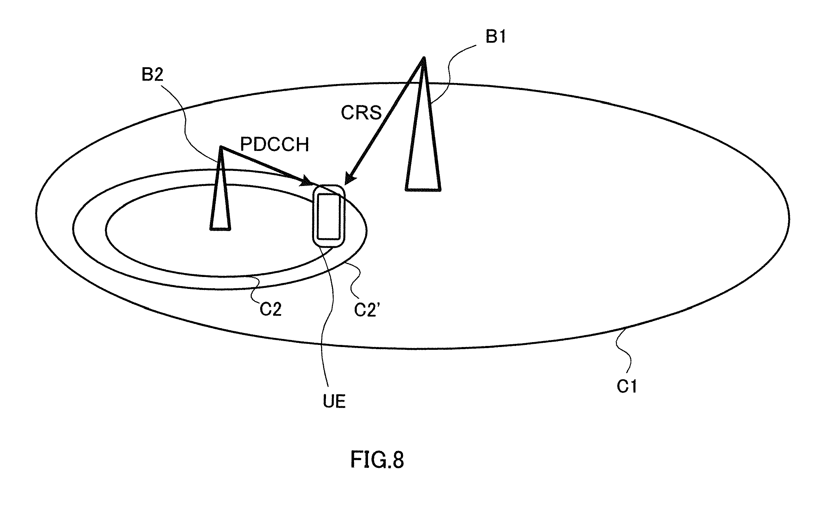

An example of an extended PDCCH mapping method according to a second example will be described with reference to FIG. 8 to FIG. 12. The second example provides, with respect to the common search spaces of an extended PDCCH, a mapping method that is better adapted to a HetNet. Consequently, it is possible to combine the second example with the extended PDCCH mapping method according to the first example.

In a HetNet, connecting user terminals UE that are located at cell edges of a small base station apparatus to the small base station apparatus by executing CRE (Cell Range Expansion) is under study. FIG. 8 shows an example of CRE in a HetNet. In FIG. 8, in a cell C1 which a radio base station apparatus (macro base station B1) forms, a small base station apparatus (pico base station B2) that forms a local cell C2 is arranged.

As shown in FIG. 8, with CRE in a HetNet, the cell range of the pico base station B2 is expanded to cell C2' by applying an offset value to the received power from the pico base station B2, and user terminals UE located at cell edges of cell C2 are connected to the pico base station B2. By this means, it is possible to expand the coverage of the pico base station B2 of low transmission power, and more user terminals UE can connect with the pico base station.

Meanwhile, when a user terminal UE is connected with the pico base station B2 through CRE, the user terminal UE receives severe interference from the macro base station B1. To prevent such interference, in subframes in which signals for the user terminal UE are transmitted from the pico base station B2, the macro base station B1 applies ABSs (Almost Blank Subframes) and MBSFN subframes.

However, although data transmission (for example, the PDSCH) is stopped in ABSs and MBSFN subframes, reference signals (cell-specific reference signals (CRSs)), synchronization signals, broadcast channels and so on are still transmitted. Consequently, when a user terminal UE is connected with the pico base station B2 through CRE, even if the macro base station B1 applies ABSs and MBSFN subframes, there is still severe interference due to CRSs from the macro base station B1 and so on, as shown in FIG. 8.

The influence of interference from CRSs from the macro base station B1 and so on becomes more significant in an existing PDCCH from the pico base station B2 to user terminals UE. So, at the pico base station B2, it becomes effective to define common search spaces in an extended PDCCH that can reduce the influence of interference from the macro base station B1.

In this way, when the macro base station B1 and the pico base station B2 both define common search spaces in an extended PDCCH in a HetNet, interference coordination between the macro base station B1 and the pico base station B2 becomes an important issue. With the extended PDCCH mapping method according to the second example, mapping of common search spaces that makes possible interference coordination between the macro base station B1 and the pico base station B2 will be discussed.

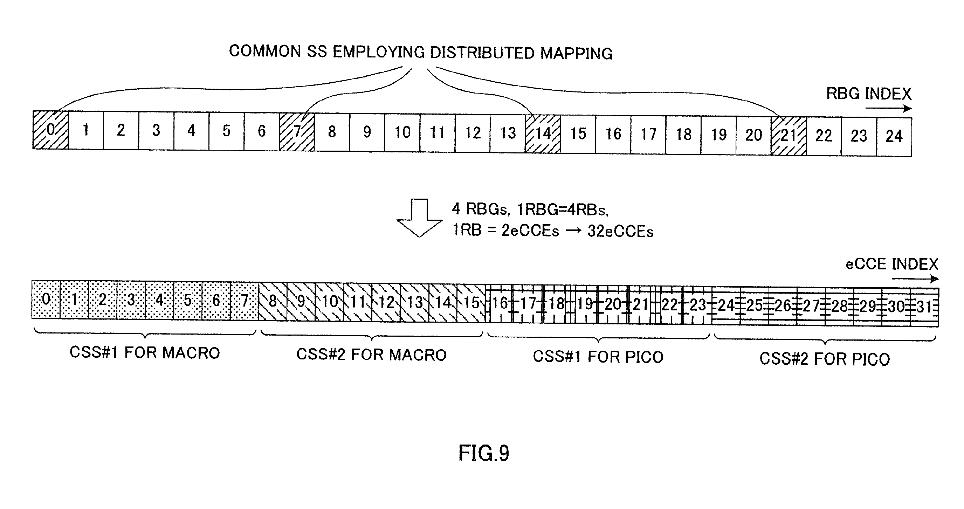

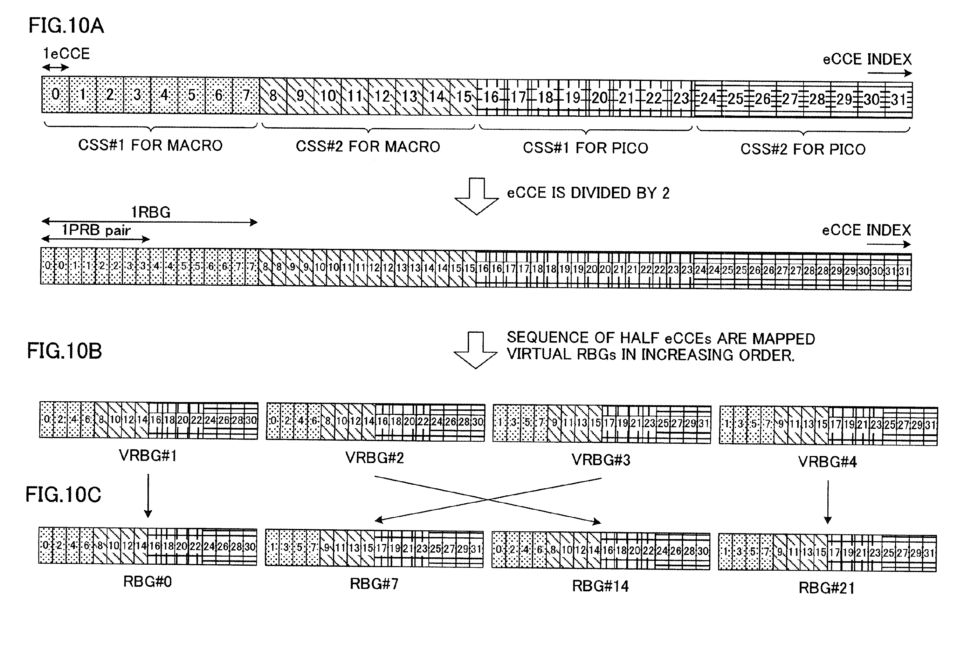

Now, an example of mapping of common search spaces in an extended PDCCH according to the second example will be described with reference to FIG. 9 and FIG. 10. Note that FIG. 9 and FIG. 10 each show an example of a 100-MHz system band, similar to FIGs. 5 to 7. Also, although examples of mapping common search spaces in RBG units will be described with FIG. 9 and FIG. 10, this is by no means limiting, and it is equally possible to map common search spaces in, for example, PRB units. Also, in FIG. 9, unillustrated UE-specific search spaces may be mapped as well.

As shown in FIG. 9, the macro base station B1 and the pico base station B2 of a HetNet map common search spaces of an extended PDCCH to a plurality of common RBGs (RBGs #0, #7, #14 and #21). That is, in FIG. 9, in both the macro base station B1 and the pico base station B2, a plurality of RBGs (RBGs #0, #7, #14 and #21) are allocated for the common search spaces.

Meanwhile, eCCEs to constitute the plurality of RBGs are allocated separately between the macro base station B1 and the pico base station B2. To be more specific, a plurality of eCCEs (eCCEs #0 to #15), to which consecutive index numbers are assigned in order along a predetermined frequency direction (in FIG. 9, in the direction from a low frequency), are allocated to the macro base station B1. Also, a plurality of eCCEs (eCCEs #16 to #31), to which the rest of the consecutive index numbers are assigned, are allocated to the pico base station B2.

In this way, while a plurality of RBGs where the common search spaces are mapped are made common between the macro base station B1 and the pico base station B2, the eCCEs are made separate. To be more specific, one eCCE is allocated to the macro base station B1, and the other eCCE is allocated to the pico base station B2. As a result of this, even when a plurality of RBGs to map the common search spaces to be shared, it is still possible to achieve a frequency diversity effect by applying the following distributed mapping.

In distributed mapping, eCCEs #0 to #15 allocated for the macro base station B1 and eCCEs #16 to #31 allocated for the pico base station B2 are divided each, and are mapped such that the divided eCCEs are distributed to RBGs of varying frequency bands. By this means, it is possible to distribute the common control information arranged in the common search spaces for the macro base station B1 and the common control information arranged in the common search spaces for the pico base station B2, to RBGs #0, #7, #14 and #21 of varying frequency bands. That is, it is possible to reduce the influence of interference between the macro base station B1 and the pico base station B2, and also achieve the frequency diversity effect of common control information.

To be more specific, as shown in FIG. 10A, the macro base station B1 divides eCCEs #0 to #15 allocated for the macro base station B1 into two each, and assigns the same index numbers to the divided eCCEs (in FIG. 10A, eCCEs #0, #0 ..., #15, and #15). Similarly, the pico base station B2 divides eCCEs #16 to #31 allocated for the pico base station B2 into two each, and assigns the same index numbers to the divided eCCEs (in FIG. 10A, eCCEs #16, #16 ..., #31 and #31).

Next, as shown in FIG. 10B, the eCCEs divided in FIG. 10A are distributed and arranged to a plurality of virtual resource regions. In FIG. 10B, four virtual resource block groups (VRBGs) #1 to #4 are defined as virtual resource regions, and the sixty four eCCEs shown in FIG. 10A are distributed and arranged in VRBGs #1 to #4.

To be more specific, eCCEs that are assigned the same index numbers in FIG. 10A are arranged in VRBGs of varying index numbers in FIG. 10B. Furthermore, the thirty two eCCEs allocated to the macro base station B1 are distributed and arranged in VRBGs #1 to #4 based on the index numbers. Similarly, the thirty two eCCEs allocated to the pico base station B2 are distributed and arranged in VRBGs #1 to #4 based on the index numbers. For example, in FIG. 10B, the eCCEs of even index numbers allocated to the macro base station B1 and the pico base station B2 are arranged in VRBGs #1 and #2, and the eCCEs of odd index numbers are arranged in VRBGs #3 and #4.

As shown in FIG. 10C, a plurality of virtual resource regions (VRBGs #1 to #4) where the eCCEs have been arranged in a distributed manner are interleaved and mapped to original RBGs #0, #7, #14 and #21. FIG. 10C shows an example where the VRBGs of odd index numbers are mapped to the original RBGs in ascending order, and then the VRBGs of even index numbers are mapped to the original RBGs in ascending order. That is, VRBG #1 is mapped to original RBG #0, VRBG #2 is mapped to original RBG #7, VRBG #3 is mapped to original RBG #14, and VRBG #4 is mapped to original RBG #21.

As shown in FIG. 10C, by interleaving and mapping VRBGs to RBGs, it is possible to expand the frequency intervals between eCCE pairs assigned the same index numbers. Furthermore, it is possible to expand the frequency intervals between eCCE pairs for the macro base station B1 and between eCCE pairs for the pico base station B2, so that a frequency diversity effect can be achieved with respect to both common search spaces for the macro base station B1 and common search spaces for the pico base station B2. In this way, by allocating search spaces separately between the macro base station B1 and the pico base station B2, it is possible to reduce the influence of interference between the macro base station B1 and the pico base station B2, and achieve a frequency diversity effect by distributed mapping, so that user terminals UE in cell C1 of the macro base station B1 and user terminals UE in cell C2 of the pico base station B2 are both able to decode common control information reliably.

With the above extended PDCCH mapping method according to the second example, while a plurality of RBGs for mapping common search spaces are common between the macro base station B1 and the pico base station B2, the common search spaces are mapped to eCCEs of varying index numbers. Consequently, it is possible to reduce interference between the macro base station B1 and the pico base station B2, and, furthermore, by the frequency diversity effect achieved through distributed mapping, enable user terminals UE located in cell C1 of the macro base station B1 and user terminals UE located in cell C2 of the pico base station B2 respectively to decode common control information reliably.

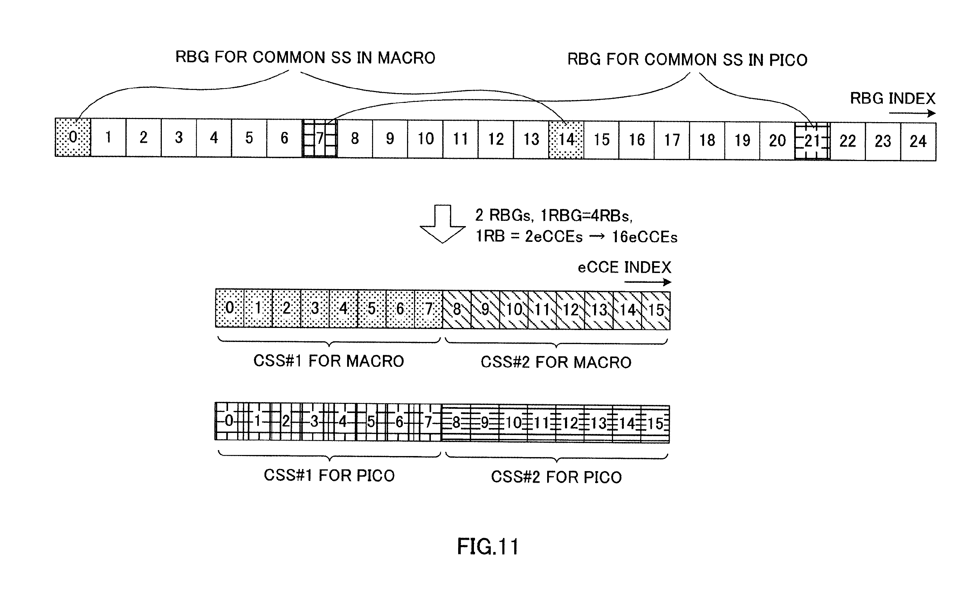

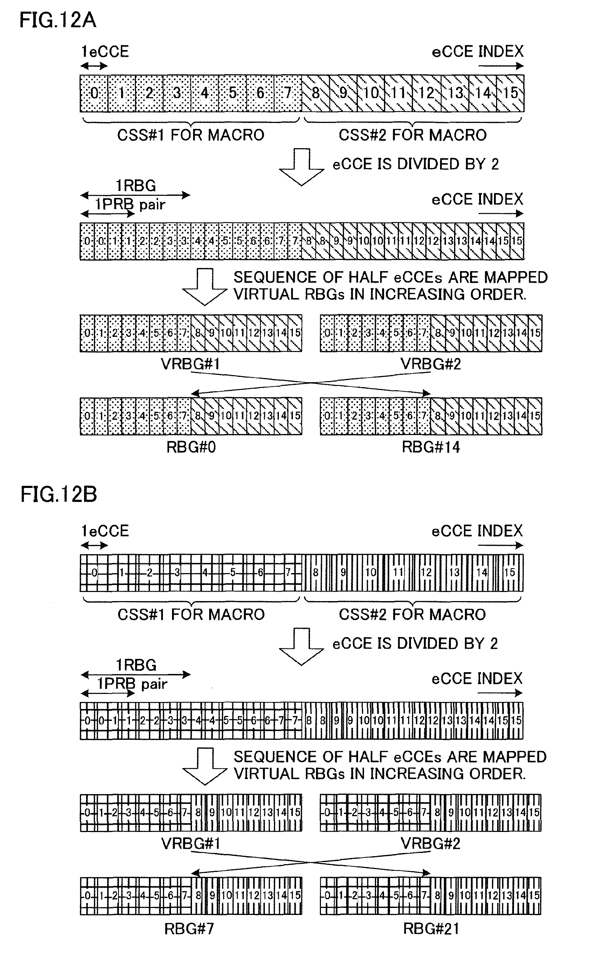

Next, another example of mapping of common search spaces of an extended PDCCH according to the second example will be described with reference to FIG. 11 and FIG. 12. In one example of mapping described with reference to FIG. 9, common search spaces for the macro base station B1 and common search spaces for the pico base station B2 are separated in eCCE units. The difference with this example is that, as shown in FIG. 11, common search spaces for the macro base station B1 and common search spaces for the pico base station B2 are separated in RBG units. Note that, although not illustrated, it is also possible to separate the common search spaces in PRB units as well.

As shown in FIG. 11, common search spaces for the macro base station B1 are mapped to RBGs #0 and #14. Meanwhile, common search spaces for the pico base station B2 are mapped to RBGs #7 and #21. In this way, with this example, the macro base station B1 and the pico base station B2 map common search spaces to RBGs that mutually differ between the macro base station B1 and the pico base station B2. As a result of this, it is possible to achieve a frequency diversity effect by applying the following distributed mapping.

When common search spaces for the macro base station B1 and common search spaces for the pico base station B2 are separated in RBG units, eCCEs are also defined separately between the macro base station B1 and the pico base station B2. In FIG. 11, eCCEs #0 to #15 are defined in association with RBGs #0 and #14 for the macro base station B1. Similarly, eCCEs #0 to #15 are defined in association with RBGs #7 and #21 for the pico base station B2. Note that, as has been described with reference to FIG. 6, one RBG is formed with four PRBs, and one PRB corresponds to two eCCEs. In FIG. 6, common search spaces for the macro base station B1 are mapped to two RBGs and therefore correspond to sixteen eCCEs (eCCEs #0 to #15). The same applies to common search spaces for the pico base station B2.

Also, as shown in FIG. 12A, eCCEs #0 to #15 constituting common search spaces for the macro base station B1 are divided each, and mapped such that the divided eCCEs are distributed to RBGs #0 and #14 of varying frequency bands. As described above, the divided eCCEs are assigned the same index numbers, and the eCCEs assigned the same index numbers are arranged in varying VRBGs #1 and #2. Then, VRBGs #1 and #2 are mapped to original RBGs #14 and #0, respectively. By this means, it is possible to expand the frequency interval between a pair of eCCEs assigned the same index number, so that a frequency diversity effect can be achieved with respect to common search spaces for the macro base station B1.

Similarly, as shown in FIG. 12B, eCCEs #0 to #15 to constitute common search spaces for the pico base station B2 are divided each, and mapped such that the divided eCCEs are distributed to RBGs #7 and #21 of varying frequency bands. Note that the details of mapping are the same as in FIG. 12A, and therefore descriptions thereof will be omitted.

With an extended PDCCH mapping method according to another example of the second example, common search spaces are mapped to varying RBGs between the macro base station B1 and the pico base station B2. Consequently, it is possible to reduce interference between the macro base station B1 and the pico base station B2, and, furthermore, by the frequency diversity effect achieved through distributed mapping, enable user terminals UE located in cell C1 of the macro base station B1 and user terminals UE located in cell C2 of the pico base station B2 to decode common control information reliably.

### (Configuration of radio communication system)

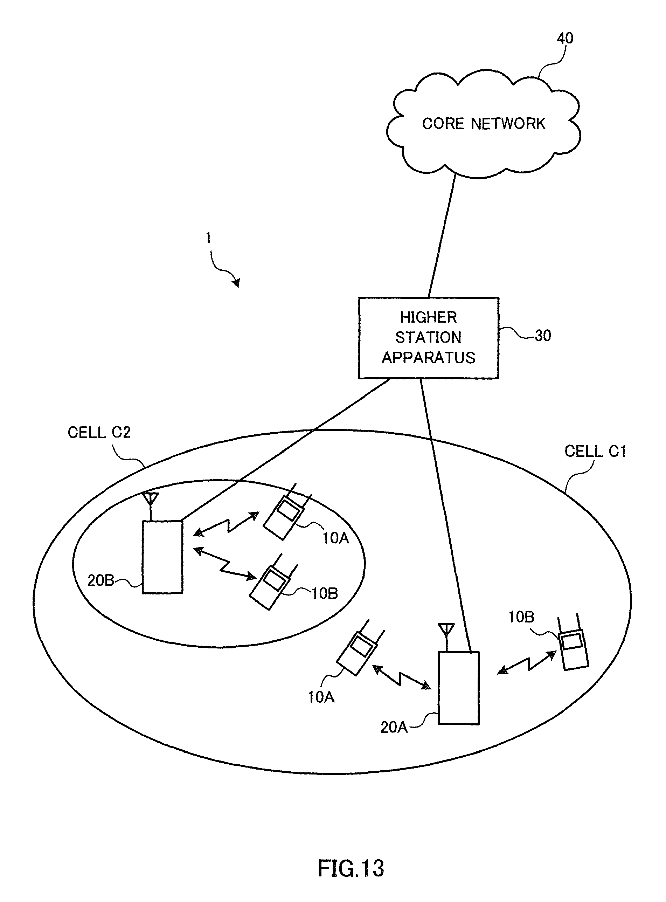

Now, a radio communication system according to an embodiment of the present invention will be described in detail. FIG. 13 is a diagram to explain a system configuration of a radio communication system according to the present embodiment. Note that the radio communication system shown in FIG. 13 is a system to accommodate, for example, an LTE system or its successor system. In this radio communication system, carrier aggregation group a plurality of fundamental frequency blocks into one, where the system band of the LTE system is one unit, is used. Also, this radio communication system may be referred to as "IMT-Advanced" or may be referred to as "4G."

As shown in FIG. 13, a radio communication system 1 is configured to include radio base station apparatuses 20 and a plurality of user terminals 10 that communicate with the radio base station apparatuses 20. The radio base station apparatuses 20 are connected with a higher station apparatus 30, and this higher station apparatus 30 is connected with a core network 40. Also, the radio base station apparatuses 20 (20A and 20B) are connected with each other by wire connection or by wireless connection. Each user terminal 10 (10A or 10B) is able to communicate with a radio base station apparatus 20 (20A or 20B) in cell C1 or C2. Note that the radio base station apparatus 20A to form a relatively large cell C1 may be referred to as a macro base station, eNB (eNodeB), HeNB (Home eNodeB) and so on. Also, the radio base station apparatus 20B, which is arranged in cell C1 and which forms a local cell C2, may be referred to as a pico base station, femto base station, RRH, relay station and so on.

Note that the higher station apparatus 30 may be, for example, an access gateway apparatus, a radio network controller (RNC), a mobility management entity (MME) and so on, but is by no means limited to these.

Although the user terminals 10 may be either LTE terminals or LTE-A terminals, the following description will be given simply with respect to "user terminals," unless specified otherwise.

In the radio communication system 1, as radio access schemes, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channels will be described. Downlink communication channels include a PDSCH (Physical Downlink Shared Channel), which is a downlink data channel used by each user terminal 10 on a shared basis, downlink L1/L2 control channels (PDCCH, PCFICH, PHICH), and an extended PDCCH, which is given by extending the PDCCH. User data and higher control information are transmitted by the PDSCH. Scheduling information for the PDSCH and the PUSCH, and so on are transmitted by the PDCCH (Physical Downlink Control Channel). The number of OFDM symbols to use for the PDCCH is transmitted by the PCFICH (Physical Control Format Indicator Channel). HARQ ACK/NACK for the PUSCH are transmitted by the PHICH (Physical Hybrid-ARQ Indicator Channel).

Scheduling information for the PDSCH and the PUSCH, and so on are transmitted by an extended PDCCH. An extended PDCCH is used to support the shortage of PDCCH capacity by using the resource region where the PDSCH is allocated.

Uplink communication channels include a PUSCH (Physical Uplink Shared Channel), which is an uplink data channel used by each user terminal on a shared basis, and a PUCCH (Physical Uplink Control Channel), which is an uplink control channel. User data and higher control information are transmitted by means of this PUSCH. Also, by means of the PUCCH, downlink radio quality information (CQI: Channel Quality Indicator), ACK/NACK and so on are transmitted.

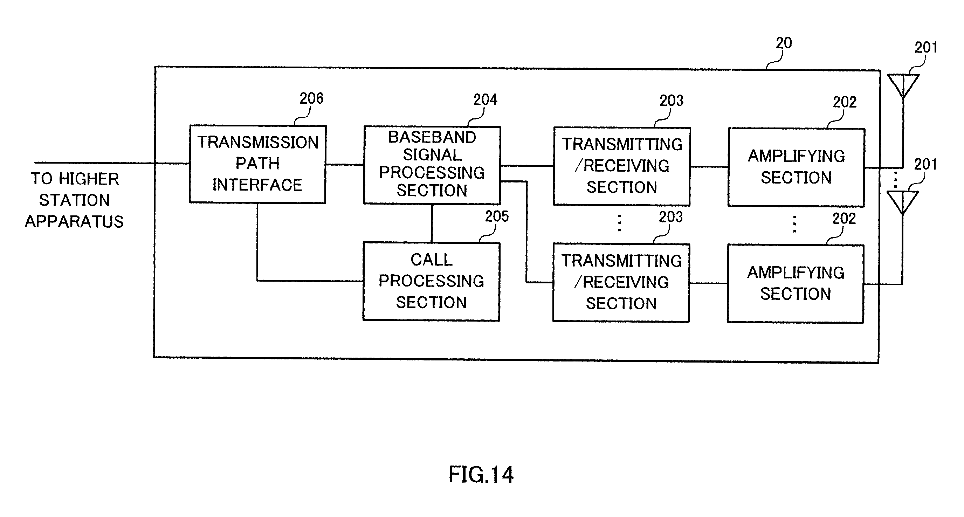

An overall configuration of the radio base station apparatus according to the present embodiment will be described with reference to FIG. 14. The radio base station apparatus 20 has a plurality of transmitting/receiving antennas 201 for MIMO transmission, amplifying sections 202, transmitting/receiving sections (transmitting sections) 203, a baseband signal processing section 204, a call processing section 205, and a transmission path interface 206.

User data to be transmitted from the radio base station apparatus 20 to the user terminals 10 on the downlink is input from the higher station apparatus 30 into the baseband signal processing section 204, via the transmission path interface 206.

In the baseband signal processing section 204, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process are performed, and the result is transferred to each transmitting/receiving section 203. Furthermore, signals of downlink control channels are also subjected to transmission processes such as channel coding and an inverse fast Fourier transform, and are transferred to each transmitting/receiving section 203.

Also, the baseband signal processing section 204 reports, to the user terminals 10, control information for allowing communication in that cell, through a broadcast channel. The information for communication in the cell includes, for example, the uplink or downlink system bandwidth, resource block information allocated to the user terminals 10, precoding information for precoding in the user terminals 10, identification information of a root sequence (root sequence index) for generating random access preamble signals in the PRACH (Physical Random Access Channel), and so on. The precoding information may be transmitted via an independent control channel such as the PHICH.

The transmitting/receiving sections 203 convert the baseband signals, which have been subjected to precoding and output from the baseband signal processing section 204 on a per antenna basis, into a radio frequency band. The amplifying sections 202 amplify the radio frequency signals having been subjected to frequency conversion, and output the results through the transmitting/receiving antennas 201.

Meanwhile, as for data to be transmitted from the user terminals 10 to the radio base station apparatus 20 on the uplink, radio frequency signals received by each transmitting/receiving antenna 201 are amplified in each amplifying section 202, converted into baseband signals through frequency conversion in each transmitting/receiving section 203, and input in the baseband signal processing section 204.

In the baseband signal processing section 204, user data that is included in the baseband signals that are received as input is subjected to an FFT process, an IDFT process, error correction decoding, a MAC retransmission control receiving process, and RLC layer and PDCP layer receiving processes, and is transferred to the higher station apparatus 30 via the transmission path interface 206.

The call processing section 205 performs call processes such as setting up and releasing communication channels, manages the state of the radio base station apparatus 20 and manages the radio resources.

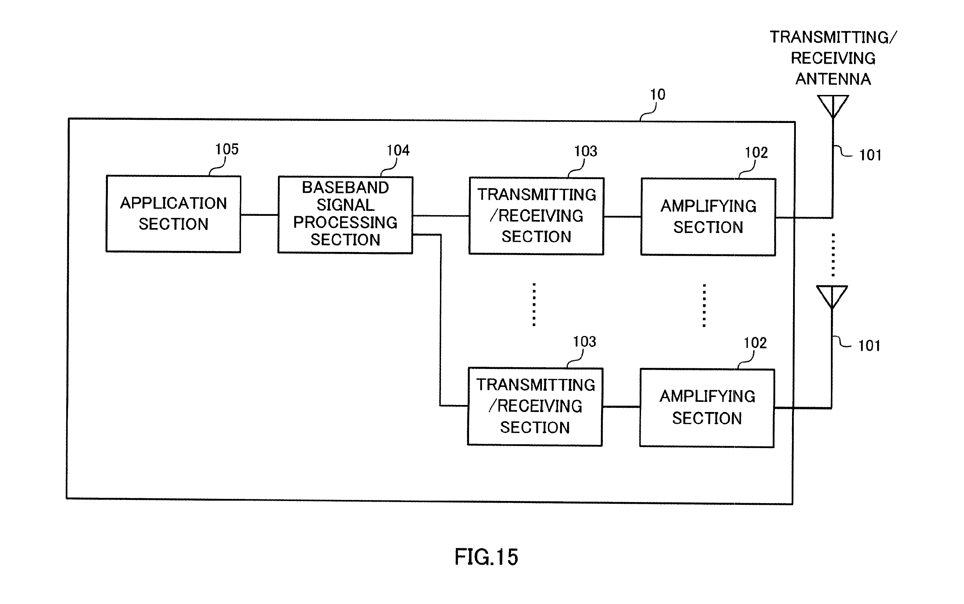

Next, an overall configuration of a user terminal according to the present embodiment will be described with reference to FIG. 15. An LTE terminal and an LTE-A terminal have the same hardware configurations in principle parts, and therefore will be described indiscriminately. A user terminal 10 has a plurality of transmitting/receiving antennas 101 for MIMO transmission, amplifying sections 102, transmitting/receiving sections (receiving sections) 103, a baseband signal processing section 104, and an application section 105.

As for downlink data, radio frequency signals that are received in a plurality of transmitting/receiving antennas 101 are each amplified in the amplifying sections 102, subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink user data is transferred to the application section 105. The application section 105 performs processes related to higher layers above the physical layer and the MAC layer, and so on. Also, in the downlink data, broadcast information is also transferred to the application section 105.

Meanwhile, uplink user data is input from the application section 105 to the baseband signal processing section 104. In the baseband signal processing section 104, a retransmission control (H-ARQ (Hybrid ARQ)) transmission process, channel coding, precoding, a DFT process, an IFFT process and so on are performed, and the result is transferred to each transmitting/receiving section 103. The baseband signals output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101.

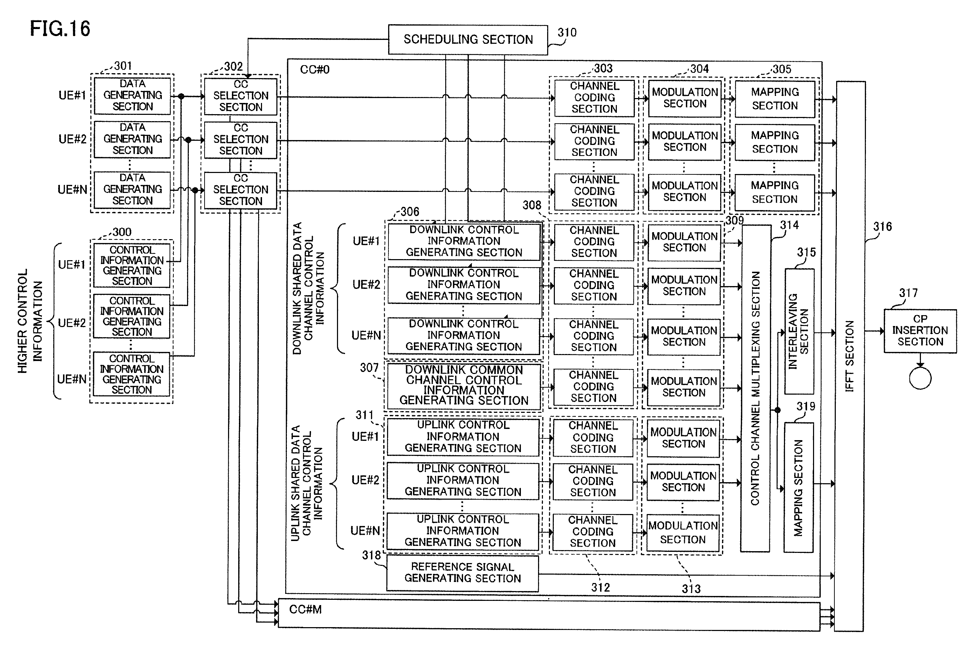

FIG. 16 is a functional block diagram of a baseband signal processing section 204 and part of the higher layers provided in the radio base station apparatus 20 according to the present embodiment, and primarily illustrates the function blocks for transmission processes in the baseband signal processing section 204. FIG. 16 illustrates an example of a base station configuration which can support the maximum number of component carriers M (CC #0 to CC #M). Transmission data for user terminals 10 under the radio base station apparatus 20 is transferred from the higher station apparatus 30 to the radio base station apparatus 20.

Control information generating sections 300 generate higher control information for higher layer signaling (for example, RRC signaling), on a per user basis. Also, the higher control information may include resource blocks (PRB positions) where an extended PDCCH (FDM-type PDCCH) can be mapped in advance.

Data generating sections 301 output transmission data transferred from the higher station apparatus 30 as user data separately, on a per user basis. Component carrier selection sections 302 select component carriers to be used for radio communication with the user terminals 10, on a per user basis.

A scheduling section 310 controls allocation of component carriers to the user terminals 10 under control, according to the communication quality of the overall system band. Also, the scheduling section 310 controls resource allocation in component carriers CC #1 to CC #M. An LTE terminal user and an LTE-A terminal user are scheduled separately. The scheduling section 310 receives as input the transmission data and retransmission commands from the higher station apparatus 30, and also receives as input channel estimation values and resource block CQIs from the receiving section having measured uplink signals.

The scheduling section 310 schedules uplink and downlink control information and uplink and downlink shared channel signals, with reference to the retransmission commands, channel estimation values and CQIs that have been received as input. A propagation path in mobile communication varies differently per frequency, due to frequency selective fading. So, the scheduling section 310 designates resource blocks (mapping positions) of good communication quality, on a per subframe basis, with respect to user data for each user terminal 10 (and this is referred to as "adaptive frequency scheduling"). In adaptive frequency scheduling, a user terminal 10 of good propagation path quality is selected for each resource block. Consequently, the scheduling section 310 designates resource blocks (mapping positions), using the CQI of each resource block, fed back from each user terminal 10.

Likewise, the scheduling section 310 designates resource blocks (mapping positions) of good communication quality, on a per subframe basis, with respect to the control information and so on to be transmitted by extended PDCCHs, by adaptive frequency scheduling. Consequently, the scheduling section 310 can designate the resource blocks (mapping positions) using the CQI of each resource block fed back from each user terminal 10.

Also, the scheduling section 310 controls the number of aggregations in accordance with the conditions of the propagation path with the user terminals 10. The scheduling section 310 controls the number of CCE aggregations for an existing PDCCH, and controls the number of eCCE aggregations for an extended PDCCH. The number of CCE aggregations and the number of eCCE aggregations are increased with respect to cell edge users. Also, MCS (coding rate and modulation scheme) that fulfills a predetermined block error rate with the assigned resource blocks is determined. Parameters to fulfill the MCS (coding rate and modulation scheme) determined by the scheduling section 310 are set in channel coding sections 303, 308 and 312, and in modulation sections 304, 309 and 313.

Note that, in the case of an existing PDCCH, "4" and "8" are supported as the number of CCE aggregations for common search spaces, and "1," "2," "4" and "8" are supported as the number of CCE aggregations for UE-specific search spaces. Also, in the case of an extended PDCCH, "4" and "8" are supported as the number of eCCE aggregations for common search spaces, and "1," "2," "4" and "8" are supported as the number of eCCE aggregations for UE-specific search spaces.

The baseband signal processing section 204 has channel coding sections 303, modulation sections 304, and mapping sections 305, to match the maximum number of users to be multiplexed, N, in one component carrier. The channel coding sections 303 perform channel coding of the downlink shared data channel (PDSCH), formed with user data (including part of higher control signals) that is output from the data generating sections 301, on a per user basis. The modulation sections 304 modulate the user data having been subjected to channel coding, on a per user basis. The mapping sections 305 map the modulated user data to radio resources.

Also, the baseband signal processing section 204 has downlink control information generating sections (generating sections) 306 that generate downlink shared data channel control information, which is user-specific downlink control information, and a downlink common channel control information generating section 307 that generates downlink common control channel control information, which is user-common downlink control information.

The downlink control information generating sections 306 generate downlink shared data channel control information (DL assignments and so on) for controlling the downlink shared data channel (PDSCH). This downlink shared data channel control information is generated on a per user basis.

The baseband signal processing section 204 has channel coding sections 308 and modulation sections 309 to match the maximum number of users to be multiplexed in one component carrier, N. The channel coding sections 308 perform channel coding of the control information generated in the downlink control information generating sections 306 and downlink common channel control information generating section 307, on a per user basis. The modulation sections 309 modulate the downlink control information after channel coding.

Also, the baseband signal processing section 204 has uplink control information generating sections (generating sections) 311, channel coding sections 312, and modulation sections 313. The uplink control information generating sections 311 generate uplink shared data channel control information (UL grants and so on) for controlling the uplink shared data channel (PUSCH). This uplink shared data channel control information is generated on a per user basis.

Control signals that are modulated on a per user basis in the above modulation sections 309 and 313 are multiplexed in a control channel multiplexing section 314. The downlink control signal for an existing PDCCH is multiplexed over the top one to three OFDM symbols in the subframe, and interleaved in an interleaving section 315. On the other hand, the downlink control signal for an extended PDCCH is frequency-division-multiplexed with the downlink shared data channel signal in the resource region following a predetermined number of OFDM symbols, and mapped to resource blocks (PRBs) by a mapping section 319. In this case, based on commands from the scheduling section 310, the mapping section 319 performs mapping by applying the methods described above using FIGs. 5 to 7 and 9 to 12.

The mapping section 319 separates and maps the common search spaces and the UE-specific search spaces in the extended PDCCH per predetermined frequency domain unit constituting the system band (PRB or RBG). To be more specific, the mapping section 319 maps the common search spaces to a plurality of non-consecutive frequency domain units

(PRBs or RBGs) such that the common search spaces in the extended PDCCH are distributed in the system band. Also, the mapping section 319 maps the UE-specific search spaces to a plurality of non-consecutive frequency domain units (PRBs or RBGs) such that the UE-specific search spaces in the extended PDCCH are distributed in the system band. Meanwhile, the mapping section 319 localizes and maps the specific control information for a specific user terminal UE to frequency domain units where received quality is the best for that specific user terminal UE, among a plurality of frequency domain units constituting the UE-specific search spaces. Also, if received quality is not available for use, distributed mapping may be applied.

Also, the mapping section 319 forms a plurality of frequency domain units (PRBs or RBGs) where common search spaces are mapped such that each includes a plurality of eCCEs, divides the eCCEs, and also distributes and maps the divided eCCEs to varying frequency domain units (PRBs or RBGs).

Here, the eCCEs included in a plurality of frequency domain units (PRBs or RBGs) where the common search spaces are mapped are assigned index numbers along the frequency direction, and the divided eCCEs are assigned the same index number. The mapping section 319 arranges the eCCEs assigned the same index numbers to varying virtual frequency domain units (VPRBs or VRBGs) aligned along the frequency direction, and then interleaves a plurality of virtual frequency domain units (VPRBs or VRBGs). By this means, the frequency intervals between eCCEs to which the same index numbers are assigned expand, so that a frequency diversity effect can be achieved effectively.

Also, the mapping section 319 may map the common search spaces to common frequency domain units (PRBs or RBGs) between the macro base station B1 and the pico base station B2, and, meanwhile, may also map the common search spaces to varying eCCEs as well. In this case, for example, a plurality of eCCEs (in FIG. 9, eCCEs #0 to #15), to which consecutive index numbers are assigned from a predetermined frequency direction, are allocated to the macro base station B1, and a plurality of eCCEs (in FIG. 9, eCCEs #16 to #31), to which the rest of the consecutive index numbers are assigned, are allocated to the pico base station B2.

Also, the mapping section 319 may allocate the common search spaces to varying frequency domain units (PRBs or RBGs) between the macro base station B1 and the pico base station B2.

A reference signal generating section 318 generates cell-specific reference signals (CRSs), which are used for various purposes such as channel estimation, symbol synchronization, CQI measurement, mobility measurement, and so on. Also, the reference signal generating section 318 generates DM-RSs, which are user-specific downlink demodulation reference signals. DM-RSs are used not only to demodulate user data, but are also used to demodulate downlink control information that is transmitted in an extended PDCCH.

Also, a precoding weight multiplication section to control (shift) the phase and/or the amplitude of transmission data and user-specific demodulation reference signals (DM-RSs) mapped to subcarriers, may be provided for each of a plurality of antennas. Transmission data and user-specific demodulation reference signals (DM-RSs), to which a phase and/or amplitude shift has been applied by the precoding weight multiplication sections, are output to an IFFT section 316.

The IFFT section 316 receives control signals as input from the interleaving section 315 and the mapping section 319, receives user data as input from the mapping sections 305, and receives reference signals as input from the reference signal generating section 318. The IFFT section 316 converts downlink channel signals from frequency domain signals into a time sequence signal by performing an inverse fast Fourier transform. A cyclic prefix insertion section 317 inserts cyclic prefixes in the time sequence signal of the downlink channel signals. Note that a cyclic prefix functions as a guard interval for cancelling the differences in multipath propagation delay. Transmission data, to which cyclic prefixes have been added, is transmitted to the transmitting/receiving sections 203.

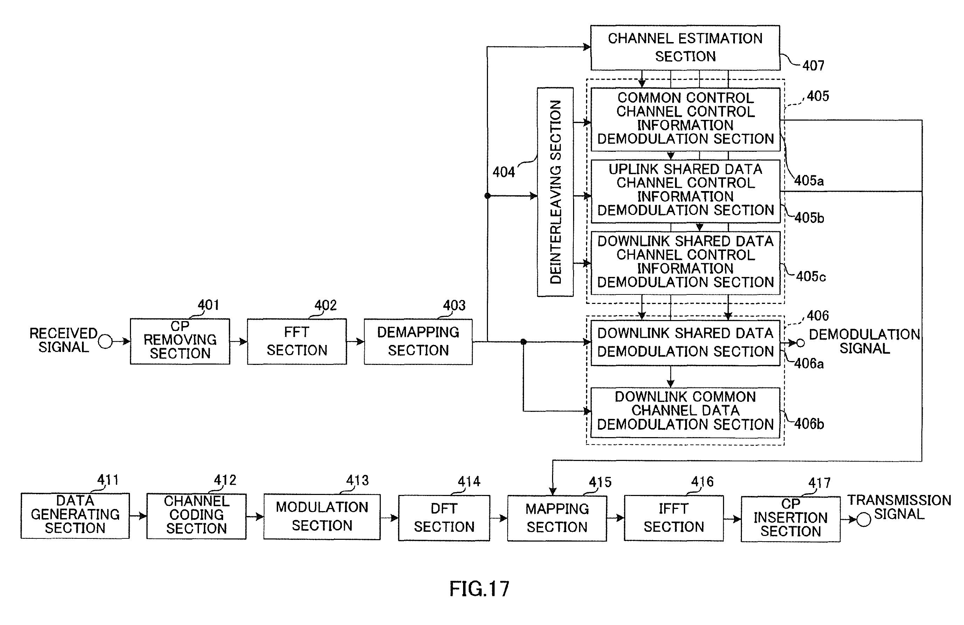

FIG. 17 is a functional block diagram of a baseband signal processing section 104 provided in a user terminal 10, illustrating function blocks of an LTE-A terminal supporting LTE-A. First, the downlink configuration of the user terminal 10 will be described.

A downlink signal that is received from the radio base station apparatus 20 as received data has the CPs removed in a CP removing section 401. The downlink signal, from which the CPs have been removed, is input in an FFT section 402. The FFT section 402 performs a fast Fourier transform (FFT) on the downlink signal, converts the time domain signal into a frequency domain signal, and inputs this signal in a demapping section 403. The demapping section 403 demaps the downlink signal, and extracts multiplex control information, in which a plurality of pieces of control information are multiplexed, user data, and higher control information, from the downlink signal. Note that the demapping process by the demapping section 403 is performed based on higher control information that is received as input from the application section 105. The multiplex control information output from the demapping section 403 is deinterleaved in a deinterleaving section 404.

Also, the baseband signal processing section 104 has a control information demodulation section 405 that demodulates control information, a data demodulation section 406 that demodulates downlink shared data, and a channel estimation section 407. The control information demodulation section 405 includes a common control channel control information demodulation section (demodulation section) 405a that demodulates downlink common control channel control information from the multiplex control information, an uplink shared data channel control information demodulation section (demodulation section) 405b that demodulates uplink shared data channel control information from the multiplex control information, and a downlink shared data channel control information demodulation section 405c that demodulates downlink shared data channel control information from the multiplex control information. The data demodulation section 406 includes a downlink shared data demodulation section 406a that demodulates user data and higher control signals, and a downlink common channel data demodulation section 406b that demodulates downlink common channel data.

The common control channel control information demodulation section 405a extracts common control channel control information (common control information), which is control information that is common between users, by, for example, performing a blind decoding process, a demodulation process, and a channel decoding process of the common search spaces in the downlink control channel (PDCCH) and the extended downlink control channel (extended PDCCH). The common control channel control information, including downlink channel quality information (CQI), is input in a mapping section 415, and is mapped as part of transmission data for the radio base station apparatus 20. In the case of an existing PDCCH, the blind decoding process is performed with respect to a plurality of candidate CCEs signaled as common search spaces. Also, in the case of an extended PDCCH, the blind decoding process is performed with respect to a plurality of candidate eCCEs signaled as common search spaces.

The uplink shared data channel control information demodulation section 405b extracts uplink shared data channel control information (specific control information) (for example, UL grants), by, for example, performing a blind decoding process, a demodulation process, and a channel decoding process of the user-specific search spaces of the downlink control channel (PDCCH) and the extended downlink control channel (extended PDCCH). In the case of an existing PDCCH, the blind decoding process is performed with respect to a plurality of candidate CCEs signaled as UE-specific search spaces. Also, in the case of an extended PDCCH, the blind decoding process is performed with respect to a plurality of candidate eCCEs signaled as UE-specific search spaces. The demodulated uplink shared data channel control information is input in the mapping section 415 and is used to control the uplink shared data channel (PUSCH).

The downlink shared data channel control information demodulation section 405c extracts downlink shared data channel control information (specific control information) (for example, DL assignments), by, for example, performing a blind decoding process, a demodulation process, and a channel decoding process of the user-specific search spaces of the downlink control channel (PDCCH) and the extended downlink control channel (extended PDCCH). In the case of an existing PDCCH, the blind decoding process is performed with respect to a plurality of candidate CCEs signaled as UE-specific search spaces. Also, in the case of an extended PDCCH, the blind decoding process is performed with respect to a plurality of candidate eCCEs signaled as UE-specific search spaces. The demodulated downlink shared data channel control information is input in the downlink shared data demodulation section 406a, used to control the downlink shared data channel (PDSCH), and input in the downlink shared data demodulation section 406a.

The downlink shared data demodulation section 406a acquires user data, higher control information and so on, based on the downlink shared data channel control information received as input from the downlink shared data channel control information demodulation section 405c. The PRB positions (or RBG positions) where an extended PDCCH can be mapped, included in the higher control information, are output to the downlink shared data channel control information demodulation section 405c. The downlink common channel data demodulation section 406b demodulates the downlink common channel data based on the uplink shared data channel control information that is input from the uplink shared data channel control information demodulation section 405b.

The channel estimation section 407 performs channel estimation using user-specific reference signals (DM-RSs) or cell-specific reference signals (CRSs). When demodulating an existing PDCCH, channel estimation is performed using the cell-specific reference signals. On the other hand, when demodulating an extended PDCCH and user data, channel estimation is performed using DM-RSs, CRSs. The estimated channel variation is output to the common control channel control information demodulation section 405a, the uplink shared data channel control information demodulation section 405b, the downlink shared data channel control information demodulation section 405c and the downlink shared data demodulation section 406a. In these demodulation sections, demodulation processes are performed using the estimated channel variation and reference signals for demodulation.

Also, when a plurality of eCCEs for varying users are frequency-division-multiplexed in the same PRB (or in the same RBG) in an extended PDCCH, control information is demodulated using the DM-RS antenna ports associated with the numbers of the frequency resources in the PRB (or in the RBG) In this case, the DM-RSs in the same PRB (or in the same RBG) are distinguished between users by the transmission weights of the DM-RSs, which vary on a per user basis (on a per eCCE basis). On the other hand, when transmission diversity is applied, it is possible to set the DM-RS antenna ports for user terminals allocated in one PRB (or one RBG), on a common basis.

The baseband signal processing section 104 has, as function blocks of the transmission processing system, a data generating section 411, a channel coding section 412, a modulation section 413, a DFT section 414, a mapping section 415, an IFFT section 416, and a CP insertion section 417. The data generating section 411 generates transmission data from bit data that is received as input from the application section 105. The channel coding section 412 applies channel coding processing such as error correction to the transmission data, and the modulation section 413 modulates the transmission data after channel coding by QPSK and so on.

The DFT section 414 performs a discrete Fourier transform on the modulated transmission data. The mapping section 415 maps each frequency component of the data symbol after the DFT to subcarrier positions designated by the radio base station apparatus 20. The IFFT section 416 converts input data matching the system band into time sequence data by performing an inverse fast Fourier transform, and the CP insertion section 417 inserts cyclic prefixes in the time sequence data per data division.

As described above, the radio base station apparatus 20 according to the present embodiment separates and maps common search spaces and UE-specific search spaces in predetermined frequency domain units (PRBs or RBGs). In particular, the radio base station apparatus 20 maps the common search spaces to a plurality of non-consecutive frequency domain units (RBs or RBGs) so as to be distributed in the system band. Consequently, by virtue of a frequency diversity effect, all user terminals UE in a cell are able to decode common control information reliably. Also, the radio base station apparatus 20 maps the UE-specific search spaces to a plurality of non-consecutive frequency domain units (PRBs or RBGs) so as to be distributed in the system band. Meanwhile, the radio base station apparatus 20 localizes and maps the dedicated control information for a specific user terminal UE to frequency domain units where received quality is the best for that specific user terminal UE, among a plurality of frequency domain units constituting the UE-specific search spaces. Consequently, the specific user terminal UE is able to decode the specific control information in frequency domain units (PRBs or RBGs) of better received quality. Also, if received quality is not available for use, distributed mapping may be applied.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2012-017314, filed on January 30, 2012, including the specification, drawings, and abstract, is incorporated herein by reference in its entirety.

## Claims

1. A radio base station apparatus comprising:
a mapping section configured to separate and map, per predetermined frequency domain unit constituting a system band, a common search space, which is a candidate region to arrange common control information that is common between user terminals in, and a UE-specific search space, which is a candidate region to arrange specific control information that is specific to each user terminal in; and
a transmission section configured to frequency-division-multiplex with a downlink shared data channel and transmit an extended downlink control channel, in which the common control information is arranged in the common search space and in which the specific control information is arranged in the UE-specific search space,
wherein the mapping section maps the common search space to a plurality of frequency domain units such that the common search space is distributed in the system band.

2. The radio base station apparatus according to claim 1, wherein the mapping section performs the mapping such that the UE-specific search space is distributed over the system band, and maps the specific control information to localized frequency domain units or to distributed frequency domain units.

3. The radio base station apparatus according to one of claim 1 and claim 2, wherein the mapping section forms the plurality of frequency domain units such that each includes a plurality of extended control channel elements, which are a unit of allocation for the extended downlink control channel, divides the extended control channel elements, and distributes and arranges the divided extended control channel elements to varying frequency domain units among the plurality of frequency domain units.

4. The radio base station apparatus according to claim 3, wherein:
the extended control channel elements included in the plurality of frequency domain units are assigned index numbers in order, along a frequency direction, and the divided extended control channel elements are assigned same index numbers; and
the mapping section arranges the extended control channel elements assigned the same index numbers to varying virtual frequency domain units that are aligned along the frequency direction, and then interleaves the plurality of virtual frequency domain units.

5. The radio base station apparatus according to claim 4, wherein:
the radio base station apparatus comprises a larger base station apparatus having a relatively large coverage area and a smaller base station apparatus having a local coverage area that is arranged in the coverage area of the larger base station apparatus;
the plurality of frequency domain units where the common search space is mapped are allocated on a common basis between the larger base station apparatus and the smaller base station apparatus; and
the extended control channel elements included in the plurality of frequency domain units are allocated separately between the larger base station apparatus and the smaller base station apparatus.

6. The radio base station apparatus according to claim 5, wherein a plurality of extended control channel elements, to which consecutive index numbers are assigned from a predetermined frequency direction, are allocated to the larger base station apparatus, and a plurality of extended control channel elements, to which rest of the consecutive index numbers are assigned, are allocated to the smaller base station apparatus.

7. The radio base station apparatus according to claim 4, wherein:
the radio base station apparatus comprises a larger base station apparatus having a relatively large coverage area and a smaller base station apparatus having a local coverage area that is arranged in the coverage area of the larger base station apparatus; and
the plurality of frequency domain units where the common search space is mapped are allocated separately between the larger base station apparatus and the smaller base station apparatus.

8. The radio base station apparatus according to claim 1, wherein the plurality of frequency domain units where the common search space is mapped are signaled to the user terminals using higher layer signaling.

9. The radio base station apparatus according to claim 1, wherein the plurality of frequency domain units where the common search space is mapped are broadcast as broadcast information.

10. The radio base station apparatus according to claim 1, wherein the predetermined frequency domain units comprise a physical resource block.

11. The radio base station apparatus according to claim 1, wherein the predetermined frequency domain units comprise a resource block group formed with a plurality of physical resource blocks that are consecutive in a frequency direction.

12. A user terminal comprising:
a receiving section configured to receive an extended downlink control channel, which is frequency-division-multiplexed with a downlink shared data channel, and in which common control information that is common between user terminals is arranged in a common search space and specific control information that is specific to each user terminal is arranged in a UE-specific search space; and
a decoding section configured to blind-decode the common control information arranged in the common search space, and also blind-decode the specific control information arranged in the UE-specific search space, wherein:
the common search space and the UE-specific search space are separated per predetermined frequency domain unit constituting a system band; and
the common search space is mapped to a plurality of frequency domain units to be distributed in the system band.

13. A radio communication system comprising:
a radio base station apparatus comprising:
a mapping section configured to separate and map, per predetermined frequency domain unit constituting a system band, a common search space, which is a candidate region to arrange common control information that is common between user terminals in, and a UE-specific search space, which is a candidate region to arrange specific control information that is specific to each user terminal in; and
a transmission section configured to frequency-division-multiplex with a downlink shared data channel and transmit an extended downlink control channel, in which the common control information is arranged in the common search space and in which the specific control information is arranged in the UE-specific search space,
a user terminal comprising:
a receiving section configured to receive the extended downlink control channel; and
a decoding section configured to blind-decode the common control information arranged in the common search space, and also blind-decode the specific control information arranged in the UE-specific search space,
wherein the mapping section maps the common search space to a plurality of frequency domain units such that the common search space is distributed in the system band.

14. A radio communication method for allowing a radio base station apparatus to transmit an extended downlink control channel that is frequency-division-multiplexed with a downlink shared data channel to a user terminal, the radio communication method comprising the steps in which:
the radio base station apparatus separates and maps, per predetermined frequency domain unit constituting a system band, a common search space, which is a candidate region to arrange common control information that is common between user terminals in, and a UE-specific search space, which is a candidate region to arrange specific control information that is specific to each user terminal in;
the radio base station apparatus frequency-division-multiplexes with a downlink shared data channel and transmits an extended downlink control channel, in which the common control information is arranged in the common search space and in which the specific control information is arranged in the UE-specific search space;
the user terminal receives the extended downlink control channel;
and
the user terminal blind-decodes the common control information arranged in the common search space, and also blind-decodes the specific control information arranged in the UE-specific search space,
wherein the radio base station apparatus maps the common search space to a plurality of non-consecutive frequency domain units such that the common search space is distributed in the system band.
